Europäisches Patentamt

European Patent Office

Office européen des brevets

(19)

(11) Numéro de publication : **0 665 432 A1**

# (12) DEMANDE DE BREVET EUROPEEN

(21) Numéro de dépôt : **95450002.1**

(22) Date de dépôt : **27.01.95**

(51) Int. Cl.⁶ : **G01N 29/14**

(30) Priorité : **31.01.94 FR 9401237**

(43) Date de publication de la demande :
**02.08.95 Bulletin 95/31**

(84) Etats contractants désignés :
**DE GB IT**

(71) Demandeur : **AEROSPATIALE SOCIETE NATIONALE INDUSTRIELLE, Société Anonyme**
**37, Boulevard de Montmorency**
**F-75781 Paris Cédex 16 (FR)**

(72) Inventeur : **Anifrani,Jean-Charles**
**10 rue du Chanoine Montfort**
**F-33160 Saint Médard en Jalles (FR)**
Inventeur : **Le Floc'h, Christian,Marcel**
**44 résidence Dulamon**
**F-33290 Blanquefort (FR)**
Inventeur : **Sornette,Didier**
**"Le Valrose" Bloc B**
**27avenue Caravadossi**
**F-06000 Nice (FR)**
Inventeur : **Souillard Bernard**
**Résidence Rivoli**
**5 Square Mondovi**
**F-78150 Le Chesnay (FR)**

(74) Mandataire : **Thébault, Jean-Louis**
**Cabinet Thébault S.A.**
**1 Allées de Chartres**
**F-33000 Bordeaux (FR)**

(54) **Procédé de détermination prédictive de la charge à rupture d'une structure.**

(57) — L'invention concerne un procédé de détermination prédictive de la charge, simple ou combinée, à rupture d'une structure, est caractérisé en ce qu'il consiste à soumettre ladite structure à une sollicitation du même type que la charge et dépendant du temps selon une loi prédéfinie, tout en enregistrant l'activité acoustique générée par les endommagements subis, jusqu'à un seuil de sollicitation prédéterminé et à exploiter ensuite l'émission acoustique enregistrée, à partir de la relation $\frac{dE}{dt} = \frac{Eo}{(t_r - t)^\alpha}$ dans laquelle $\frac{dE}{dt}$ est la variation d'énergie acoustique générée par lesdits endommagements, Eo est un facteur dit de normalisation, t est le temps, et $t_r$ est l'instant de rupture, l'exposant $\alpha$, Eo et $t_r$ étant déterminés à partir de la relation $Log \frac{dE}{dt} = - \alpha\, Log\, (t_r - t) + Log\, (Eo)$, pour déterminer la valeur de prédiction de la charge à rupture à partir de la loi préétablie liant le temps à ladite charge.

— Application notamment au contrôle de réservoirs de stockage de gaz sous haute pression.

FIG. 2

EP 0 665 432 A1

La présente invention a trait à la prédiction avant rupture de la charge à rupture d'une structure.

Par structure, on entend un corps matériel fini, homogène ou hétérogène, conçu pour affronter des sollicitations physiques déterminées qu'on appellera charge, simple ou combinée, l'invention visant à prédire la limite de résistance dudit corps vis à vis de ladite charge.

Bien que l'invention soit susceptible d'applications à bien des types de structures, elle sera décrite dans son application au contrôle de réservoirs de stockage de gaz sous haute pression et plus particulièrement encore au contrôle de réservoirs réalisés en matériau composite bobiné sur liner métallique.

De tels réservoirs, généralement sphériques, destinés à supporter des pressions internes pouvant atteindre ou dépasser 800 bars, sont soumis à des contrôles non destructifs parmi lesquels le contrôle par émission acoustique.

Cette technique, qui vise à contrôler la bonne santé du métal et du matériau composite, consiste à soumettre le réservoir à tester à une contrainte de pression déterminée, laquelle provoque dans les matériaux des endommagements microscopiques irréversibles dont l'apparition libère de l'énergie sous forme thermique et acoustique. Seule l'énergie acoustique, qui est le plus facilement exploitable, est détectée à l'aide de capteurs piézoélectriques et permet de déceler tout défaut évolutif.

Ainsi, au cours d'un cycle d'essai par paliers de pression jusqu'à une pression maximale prédéterminée, typiquement la pression de timbrage c'est-à-dire 1,5 fois la pression de service dudit réservoir, on enregistre les émissions acoustiques.

L'exploitation de ces émissions acoustiques permet à partir de critères préétablis de déclarer le réservoir apte ou inapte à remplir sa mission.

Il est évident que cette technique, si elle permet de détecter, voire de localiser, dans le réservoir sous essai des défauts, ne donne aucune indication sur la valeur effective de la pression à rupture, nécessairement bien au-delà de la pression de timbrage.

A ce jour, il n'existe pas de contrôle quantifiant pour chaque réservoir le niveau prévisionnel de pression à rupture, ce qui oblige, par souci de fiabilité, à appliquer des coefficients de sécurité conduisant inévitablement à des surdimensionnements. Or, ces surdimensionnements entraînent, en particulier pour des structures en matériaux coûteux, telles que les réservoirs évoqués plus haut, à vocation aéronautique ou spatiale, des augmentations de poids et de coût préjudiciables.

La présente invention vise à réduire ces surdimensionnements tout en renforçant la sécurité d'emploi de telles structures en proposant une technique non destructrice d'évaluation précise individuelle de chaque structure de sa limite effective de résistance aux sollicitations qu'elle doit affronter et en considération desquelles elle a été conçue et réalisée.

A cet effet, l'invention a pour objet un procédé de détermination prédictive de la charge, simple ou combinée, à rupture, d'une structure, caractérisé en ce qu'il consiste à soumettre ladite structure à une sollicitation du même type que la charge et dépendant du temps selon une loi prédéfinie, tout en enregistrant l'activité acoustique générée par les endommagements subis, jusqu'à un seuil de sollicitation prédéterminé et à exploiter ensuite l'émission acoustique enregistrée, à partir de la relation :

$$\frac{dE}{dt} = \frac{Eo}{(t_r - t)^\alpha}$$

dans laquelle :

$\frac{dE}{dt}$ est la variation d'énergie acoustique générée par lesdits endommagements ;

Eo est un facteur dit de normalisation ;

t est le temps, et

$t_r$ est l'instant de rupture,

l'exposant $\alpha$, Eo et $t_r$ étant déterminés à partir de la relation

$$\text{Log } (\frac{dE}{dt}) = - \alpha \text{ Log } (t_r - t) + \text{Log } (Eo),$$

pour déterminer la valeur de prédiction de la charge à rupture à partir de la loi préétablie liant le temps à ladite charge.

Dans son application à une structure constituée par un réservoir en un matériau composite bobiné sur liner métallique, le procédé est par exemple mis en oeuvre en portant le réservoir à une pression interne d'épreuve selon un protocole déterminé.

D'autres caractéristiques et avantages ressortiront de la description qui va suivre d'un mode de mise en oeuvre du procédé de l'invention, description donnée à titre d'exemple uniquement et en regard des dessins annexés sur lesquels :

- Figure 1 représente la variation dans le temps, exprimée en nombre de coups, de l'énergie acoustique engendrée lors d'une mise en pression d'un réservoir,
- Figure 2 illustre la traduction en coordonnées Log-Log de la relation illustrée en figure 1, et
- Figure 3 est un schéma d'un dispositif de mise en oeuvre du procédé de l'invention.

L'émission acoustique est une technique de contrôle non destructif utilisée depuis de nombreuses années pour l'acceptation par exemple de réservoirs de stockage de gaz sous haute pression devant équiper des satellites.

Cette technique consiste à enregistrer les signaux issus de dommages irréversibles lors du chargement d'une structure, par exemple un réservoir.

Les matériaux soumis à contrainte subissent des endommagements, lesquels s'accompagnent, lorsqu'ils se produisent, d'une libération d'énergie à la fois thermique et acoustique.

L'énergie de nature thermique est habituellement trop faible pour être détectée, alors que l'énergie acoustique peut être facilement détectée avec un équipement approprié constitué habituellement, par exemple pour une structure du type réservoir en matériau composite bobiné sur liner métallique, par des capteurs piézoélectriques collés à l'aide d'un couplant à la surface du matériau composite. En effet, l'énergie acoustique issue d'un endommagement local, comme la microfissuration matricielle, le délaminage ou les ruptures de fibres, se propage au travers du matériau jusqu'à atteindre la surface où les ondes acoustiques sont détectées par les capteurs piézoélectriques.

L'endommagement étant un phénomène irréversible, l'émission acoustique associée est également irréversible. La technique de l'émission acoustique, qui ne détecte que les défauts évolutifs, les seuls produisant des ondes acoustiques, rend ainsi compte de l'histoire de la structure, c'est-à-dire de son comportement dans le temps au cours de la variation de la contrainte appliquée.

Lesdits capteurs piézoélectriques fournissent des signaux électriques qui sont ensuite amplifiés et traités.

Le traitement du signal consiste principalement à détecter les événements et à en faire le comptage pour ceux qui dépassent un seuil prédéterminé. Ces dépassements de seuil, ou coups, sont comptabilisés en cumul, en taux, voire en amplitude et représentent l'activité acoustique, l'enregistrement de cette activité se faisant en fonction des paramètres de charge, la pression par exemple pour des réservoirs.

De manière à obtenir une information globale sur l'endommagement irréversible, à savoir les défauts évolutifs, la structure doit être sollicitée à un niveau suffisant et généralement subit un cycle d'essai par paliers d'effort appliqué.

L'écoute acoustique pendant chaque palier d'effort permet de déceler si l'activité de l'émission acoustique décroît, auquel cas la structure s'adapte à la contrainte, ou au contraire si cette activité s'accroît fortement, auquel cas on est en présence d'un processus d'avalanche qui peut conduire à la ruine de la structure.

Une telle technique permet d'obtenir une information de nature qualitative sur l'état de santé de la structure ainsi auscultée.

Elle peut également permettre d'obtenir une information quantitative concernant la charge à rupture, mais il s'agit d'une démarche empirique visant à établir des critères caractérisant l'approche de la rupture.

Cette démarche implique de reconduire une étude expérimentale à chaque changement de forme, d'échelle ou de matériau de la structure à tester, afin d'ajuster les critères. Pour ces raisons, cette approche n'est ni industrielle, ni suffisamment fiable.

L'approche selon la présente invention est basée sur l'établissement d'un modèle de physique statistique prenant en compte, non pas le comportement moyen, mais les fluctuations qui constituent en quelque sorte la signature des effets dominants, souvent coopératifs, conduisant directement à la rupture.

Un tel modèle fondé sur la théorie de la percolation et sur la théorie de la rupture, conduit, conformément à l'invention, la structure, telle qu'un réservoir, étant soumise à une montée en charge dépendant du temps selon une loi prédéfinie et à un enregistrement de l'énergie acoustique libérée par des endommagements, à relier au temps la variation d'énergie acoustique restituée suivant la loi de puissance :

$$\frac{dE}{dt} = \frac{Eo}{(t_r - t)^{\alpha}}$$

dans laquelle :

$\frac{dE}{dt}$ est la variation d'énergie acoustique générée par lesdits endommagements ;

Eo est un facteur dit de normalisation ;

t est le temps, et

$t_r$ est l'instant de rupture.

En coordonnées Log-Log la relation ci-dessus s'écrit :

$$\text{Log}\ (\frac{dE}{dt}) = -\ \alpha\ \text{Log}\ (t_r - t) + \text{Log}\ (Eo),$$

Cette relation n'est autre que l'équation d'une droite dont la pente donne directement l'exposant $\alpha$.

Par suite, le procédé de l'invention va consister à soumettre ledit réservoir à une montée en charge dépendant du temps selon une loi prédéfinie, tout en enregistrant l'activité acoustique générée par les endommagements subis, jusqu'à un seuil de pression déterminé, inférieur à la pression de rupture et, à déterminer par le calcul, à partir de la relation :

$$\frac{dE}{dt} = \frac{Eo}{(t_r - t)^{\alpha}}$$

dans laquelle :

$\frac{dE}{dt}$ est la variation d'énergie acoustique générée par lesdits endommagements ;

Eo est un facteur dit de normalisation ;

t est le temps, et

$t_r$ est l'instant de rupture,

l'exposant $\alpha$, Eo et $t_r$ étant déterminés à partir de la relation

$$\text{Log}\ (\frac{dE}{dt}) = -\ \alpha\ \text{Log}\ (t_r - t) + \text{Log}\ (Eo),$$

la valeur de prédiction de la charge à rupture à partir de la loi préétablie liant le temps à ladite charge.

Au cours des études et recherches menées dans le cadre de l'invention, on a mis en évidence, dans des essais réalisés sur des réservoirs sphériques constitués d'un bobinage en composite Kevlar ou carbone et résine époxy sur un liner de titane, soumis à une montée en pression monotone jusqu'à rupture, avec enregistrement de l'activité acoustique, une évolution en fonction du temps de la variation d'éner-

gie $\frac{dE}{dt}$ engendrée par les émissions acoustiques présentant une allure de courbe en loi de puissance.

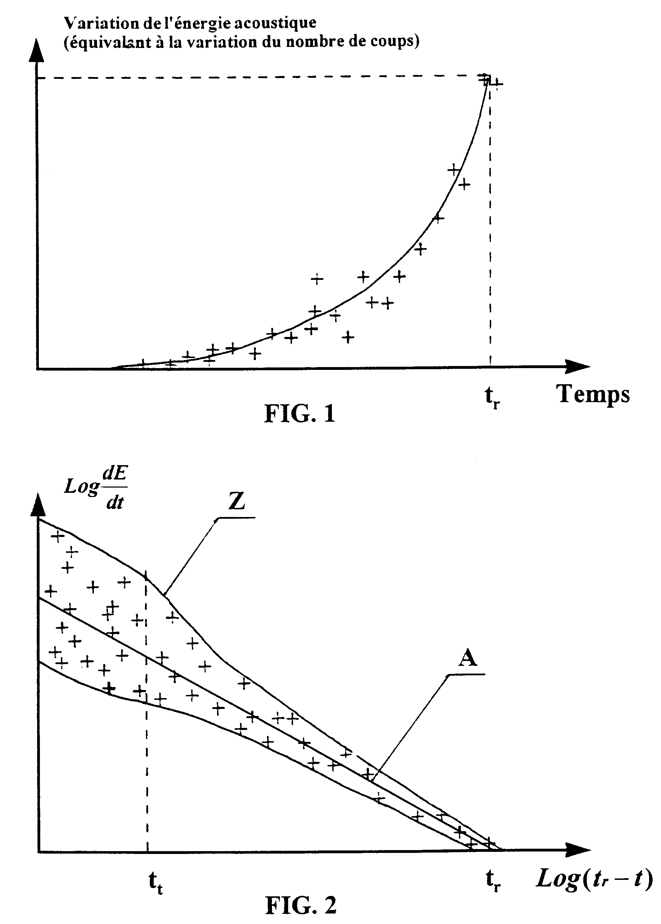

Sur la figure 1 on a illustré une telle courbe obtenue à partir de la valeur cumulée en nombre de coups de l'énergie acoustique dissipée au fur et à mesure du processus de rupture en fonction du temps, $t_r$ étant le temps de rupture du réservoir.

La traduction modélisée de cette courbe en loi de puissance s'exprime par la relation exposée plus haut :

$$\frac{dE}{dt} = \frac{Eo}{(t_r - t)^{\alpha}}$$

La transcription en coordonnées Log-Log de la relation illustrée par la figure 1 est représentée en figure 2.

Sur cette figure 2 on observe que les dépassements de seuil ou coups, au sens défini plus haut à propos de la technique de contrôle par émission acoustique, sont d'autant plus désordonnés que l'on se trouve loin de la rupture. En d'autres termes, comme on peut l'observer sur la figure 2 dans la partie en deçà du temps $t_t$ correspondant à l'atteinte par la pression d'essai de la valeur de la pression d'épreuve ou de timbrage du réservoir, les coups sont dispersés à l'intérieur d'une zone relativement large Z, laquelle zone va se rétrécir au fur et à mesure que l'on se rapproche du temps $t_r$, l'ensemble de la zone des coups s'étalant suivant un axe rectiligne A dont l'équation est précisément donnée par la relation :

$$\text{Log}\left(\frac{dE}{dt}\right) = - \alpha \, \text{Log} \, (t_r - t) + \text{Log} \, (Eo).$$

La détermination de la droite A permet d'obtenir Eo, qui est l'ordonnée à l'origine et $\alpha$, qui est la pente.

Dès lors, à partir du moment où l'on possède un nombre cumulé de coups suffisant pour déterminer avec une approximation acceptable la droite A, on pourra, bien avant d'être arrivé au temps tr où survient la destruction du réservoir, arrêter le processus de montée en pression du réservoir et prédire par le calcul, par une régression non linéaire à trois paramètres Eo, $\alpha$ et tr, ou une régression linéaire par la relation :

$$\text{Log}\left(\frac{dE}{dt}\right) = - \alpha \, \text{Log} \, (t_r - t) + \text{Log} \, (Eo),$$

la valeur de $t_r$, c'est-à-dire, puisqu'il existe entre le temps et la pression appliquée au réservoir une relation connue, la pression de rupture dudit réservoir.

Cette relation peut être linéaire, mais peut également être quelconque en fonction du protocole opératoire retenu.

Il est important de noter que les réservoirs pouvant être considérés comme des familles d'objets, lesquelles familles se distinguent les unes des autres par des paramètres tels que par exemple la nature des matériaux constitutifs, la géométrie et les dimensions desdits réservoirs, la valeur de $\alpha$ dans la relation définie plus haut sera la même pour des réservoirs présentant les mêmes paramètres représentatifs, si bien que $\alpha$ peut être considéré en quelque sorte comme l'image de chaque famille de réservoirs.

La figure 2 montre que la détermination de la droite A sera d'autant plus précise que l'on sera près du seuil de rupture, la zone Z étant de plus en plus étroite et s'identifiant de plus en plus à la droite A.

Mais l'intérêt du procédé est néanmoins d'arrêter la pression d'essai à une valeur la plus loin possible de la valeur de rupture. Il ne faut pas cependant être trop loin, par exemple en deçà de la pression de timbrage correspondant au temps $t_t$ de la figure 2, car il existerait une incertitude non négligeable dans la détermination de la droite A.

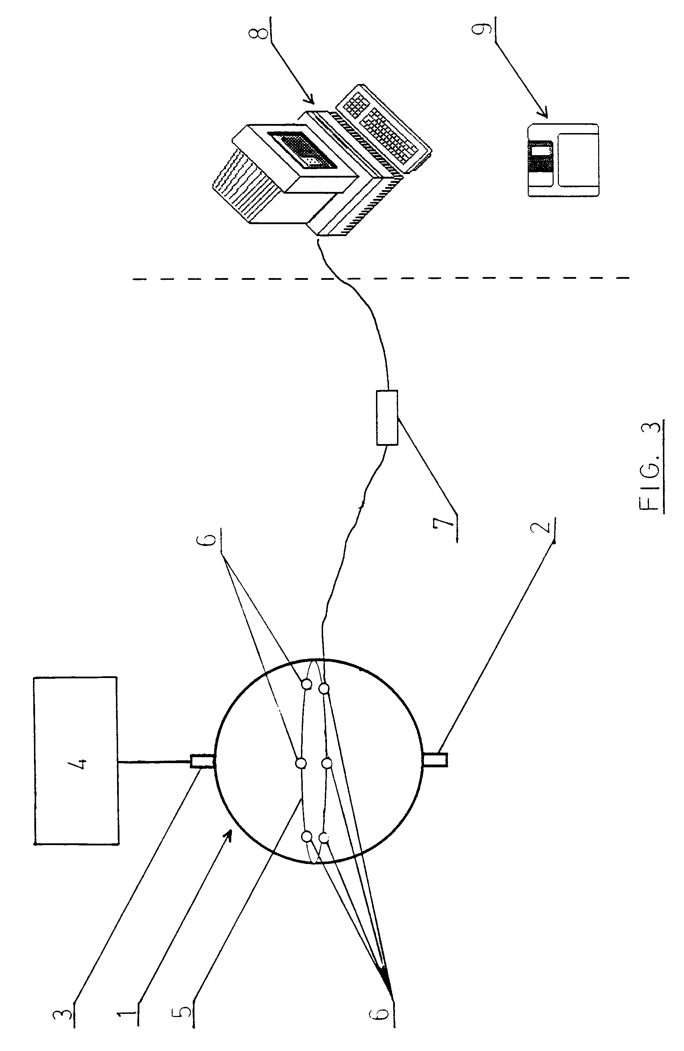

La figure 3 illustre très schématiquement un mode de mise en oeuvre du procédé de l'invention appliqué à un réservoir sphérique 1 du type composite bobiné sur liner métallique.

Ce réservoir 1 comporte deux embouts dont l'un (2) est obturé et l'autre (3) relié, à la manière connue, à une installation d'essai hydraulique conventionnelle appropriée, symbolisée en 4, le réservoir étant, également à la manière connue, maintenu par une structure support appropriée non représentée.

Le réservoir 1 est par exemple ceinturé au niveau de l'équateur d'une chaîne 5 de six capteurs piézoélectriques 6, angulairement décalés de 60°, un tel agencement étant similaire à celui utilisé dans la technique classique de contrôle par émission acoustique.

Le réservoir est disposé dans une fosse d'essai (non représentée) et la chaîne 5 est reliée, par l'intermédiaire d'un préamplificateur 7 à un dispositif 8 d'enregistrement de l'émission acoustique, situé à distance.

Le dispositif 8 est par exemple un système d'acquisition de l'émission acoustique du type LOCAN AT commercialisé par la société EURO PHYSICAL ACOUSTICS, ayant une vitesse d'acquisition des événements acoustiques suffisante (plusieurs centaines d'événements par seconde) et comportant un nombre de voies au moins égale au nombre des capteurs 6.

Le protocole de montée en pression, enregistrement de l'émission acoustique, seuillage des évènements, cumul des coups, est similaire à celui mis en oeuvre dans la technique conventionnelle de contrôle non destructif par émission acoustique rappelée plus haut.

Un tel appareil, dont les principaux réglages (seuil, gain, Peak Definition Time, Hit Definition Time, Hit lock-out Time) sont définis pour chaque essai, fournit en sortie pour chaque événement, le temps, la pression, le nombre de coups, l'énergie et l'amplitude.

Ces données sont enregistrées dans un fichier 9 qui est traité en différé à l'aide d'un matériel informatique approprié. Ce traitement consiste à évaluer

$\frac{dE}{dt}$, calculer Log $(\frac{dE}{dt})$ en fonction du temps, déterminer l'exposant et calculer la pression de rupture.

Le procédé de l'invention s'applique à chaque réservoir ou structure dont on veut connaître la pression à rupture et permet pour chaque structure de prédire la pression à rupture avec une précision remarquable.

Par ailleurs, le procédé de l'invention ayant permis de vérifier que, pour un type déterminé de structure, la pression de rupture se situait dans une plage de valeurs bien circonscrite, il devient possible de réduire, à la construction, les coefficients de sécurité, ce qui entraîne une réduction à la fois du poids de la structure, à capacité égale et du coût de fabrication.

L'invention s' applique à toute structure soumise à une pression, interne ou externe, et d'une manière générale à toute structure soumise à des sollicitations mécaniques, étant entendu que la sollicitation à des fins d'écoute acoustique appliquée conformément au procédé de l'invention est de même nature que celle pour laquelle la structure est conçue.

## Revendications

1. Procédé de détermination prédictive de la charge, simple ou combinée, à rupture, d'une structure, caractérisé en ce qu'il consiste à soumettre ladite structure à une sollicitation du même type que la charge et dépendant du temps selon une loi prédéfinie, tout en enregistrant l'activité acoustique générée par les endommagements subis, jusqu'à un seuil de sollicitation prédéterminé et à exploiter ensuite l'émission acoustique enregistrée, à partir de la relation :

$$\frac{dE}{dt} = \frac{Eo}{(t_r - t)^\alpha}$$

dans laquelle :

$\frac{dE}{dt}$ est la variation d'énergie acoustique générée par lesdits endommagements ;

Eo est un facteur dit de normalisation ;
t est le temps, et
$t_r$ est l'instant de rupture,
l'exposant $\alpha$, Eo et $t_r$ étant déterminés à partir de la relation

$$\text{Log} (\frac{dE}{dt}) = - \alpha \text{ Log} (t_r - t) + \text{Log (Eo)},$$

pour déterminer la valeur de prédiction de la charge à rupture à partir de la loi préétablie liant le temps à ladite charge.

2. Procédé suivant la revendication 1, appliqué à une structure constituée par un réservoir (1) en un matériau composite bobiné sur liner métallique, caractérisé en ce que l'on porte le réservoir à une pression d'épreuve selon un protocole déterminé.

3. Procédé suivant la revendication 2, caractérisé en ce que ladite pression d'épreuve est une pression monotone croissant jusqu'audit seuil de sollicitation prédéterminé.

Variation de l'énergie acoustique
(équivalant à la variation du nombre de coups)

FIG. 1

$t_r$   Temps

$Log\dfrac{dE}{dt}$   Z

A

$t_t$     $t_r$   $Log(t_r - t)$

FIG. 2

FIG. 3

**Office européen des brevets**

# RAPPORT DE RECHERCHE EUROPEENNE

Numero de la demande

EP 95 45 0002

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | EP-A-0 279 431 (UNION CARBIDE CORPORATION)<br>* le document en entier *<br>--- | 1 | G01N29/14 |
| Y | US-A-4 577 487 (DOOLEY)<br>* le document en entier *<br>--- | 1 | |
| Y | US-A-4 140 021 (NOMURA ET AL.)<br>* le document en entier *<br>--- | 1 | |
| A | US-A-4 468 965 (BLACKBURN)<br>* le document en entier *<br>--- | 1 | |
| A | US-A-3 545 262 (R.K. STEELE ET AL.)<br>* le document en entier *<br>----- | 1 | |
| | | | **DOMAINES TECHNIQUES RECHERCHES (Int.Cl.6)**<br><br>G01N |

Le présent rapport a été établi pour toutes les revendications

| Lieu de la recherche | Date d'achèvement de la recherche | Examinateur |
|---|---|---|
| LA HAYE | 9 Mai 1995 | Kouzelis, D |